(19)

**Europäisches Patentamt**
**European Patent Office**
**Office européen des brevets**

(11) **EP 3 985 609 A1**

(12) **EUROPEAN PATENT APPLICATION**

(43) Date of publication:
**20.04.2022 Bulletin 2022/16**

(21) Application number: **20202578.9**

(22) Date of filing: **19.10.2020**

(51) International Patent Classification (IPC):
**G06T 7/73** (2017.01)

(52) Cooperative Patent Classification (CPC):
**G06T 7/75;** G06T 2207/30204; G06T 2207/30241;
G06T 2207/30244

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Cajic, Stjepan**
**88345 Grude (BA)**

(72) Inventor: **Cajic, Stjepan**
**88345 Grude (BA)**

(74) Representative: **Werhahn, Jasper Carl**
**Meissner Bolte Patentanwälte Rechtsanwälte
Partnerschaft mbB
P.O. Box 86 06 24
81633 München (DE)**

(54) **POSITIONING SYSTEM AND METHOD FOR DETERMINING THE THREE-DIMENSIONAL POSITION OF A MOVABLE OBJECT**

(57) The present invention relates to a positioning system for determining the three-dimensional position of a movable object 1, comprising: a camera 10 that is rigidly attachable to the object 1 and is configured to capture a series of images containing image representations of at least a part of a plurality of visual features 2 that are placeable or placed at fixed locations spaced apart from the object 1, storage means 11 for storing a 3D model 30 of the plurality of visual features 2, the 3D model 30 comprising a set of landmarks $p_0$; $p_{01}$, $p_{02}$, ..., $p_{0n}$ with one landmark $p_0$ for each visual feature 2, each landmark $p_0$ containing information on the three-dimensional position of the corresponding visual feature 2, and computing means 12 that are configured to: create a 3D submodel 31 of the visual features 2 whose image representations are contained in the series of images captured by the camera 10, the 3D submodel 31 comprising a set of sub-landmarks $p_s$; $p_{s1}$, $p_{s2}$, ..., $p_{sm}$ with one sub-landmark $p_s$ for each visual feature 2 whose image representation is contained in the series of images captured by the camera 10, each sub-landmark $p_s$ containing information on the three-dimensional position of the corresponding visual feature 2; perform matching between the 3D submodel 31 and the 3D model 30 to identify at least a part of the visual features 2 whose three-dimensional position is contained in the 3D submodel 31; determine the three-dimensional position of the object 1 based on the information on the three-dimensional positions of the visual features 2 identified in the matching process. The present invention further proposes a method for determining the three-dimensional position of a movable object.

Fig. 1

## Description

The present invention relates to a positioning system according to the subject-matter of claim 1 and a method for determining the three-dimensional position of a movable object according to the subject-matter of claim 7.

The determination of the three-dimensional position of a movable object is a highly relevant task in many different technical fields. A prominent example for a technical field in which reliable positioning systems are warranted is the field of autonomous driving. In order to make the most informed decisions possible, a self-driving vehicle must know its position and orientation at all times. A classical approach for the determination of an object's, particularly a vehicle's, position is by using wheel odometry. Wheel odometry is unreliable for use during prolonged periods of time because occasional wheel slippage causes position miscalculations and the system must be reset frequently. Positioning systems such as GPS suffer from poor spatial resolutions of $\pm 5$m and are not suitable for indoor use, e.g. for vehicles used in warehouses.

With the rise in computing power, positioning systems that rely on machine vision become increasingly appealing. Camera based positioning systems promise precision and versatility.

Camera based positioning systems perform the determination of an object's position by processing images captured by a camera that is rigidly attached to the object to be located. By processing the captured images, the position of the camera in 3D space can be determined, as well as the orientation of the camera in 3D space. Since the position and orientation of the camera relative to the object to be located is known due to the rigid attachment, the three-dimensional position of the object can be readily inferred from the determined position of the camera.

Camera based positioning systems are widely used to determine the position and orientation of film cameras. The automatic determination of a film camera's position and pose (i.e., its position and orientation) is an essential task in the field of augmented and virtual reality. When the film camera's pose is precisely known, this data can be used by a graphics engine to render virtual graphics realistically and overlay them with the image data recorded by the film camera. For the graphics to appear realistic, virtual objects, lights and shadows must be rendered in the correct perspective. So, for each miniscule movement of the film camera, the render engine takes in the updated position and pose of the film camera and adjusts the graphics rendering to account for that movement.

Determining the position of an object such as a film camera by processing images captured with the camera of a positioning system can be done by various methods.

A field of commonly employed methods is referred to as SLAM (Simultaneous Localization and Mapping) in the literature. With this approach, the positioning system builds and/or updates a map of its initially unknown surroundings whilst simultaneously keeping track of its position within the surroundings. With this approach, the positioning system automatically detects visual features of the surroundings that are captured by the camera of the positioning system and determines and stores the 3D positions of the detected visual features in a 3D model that contains information on the 3D position of the visual features. These stored 3D positions can then be used to quickly determine the location of the camera. The 3D model may be created, for example, via the use of standard "Structure from Motion" techniques.

A seminal piece of work in this field that describes implementations of a SLAM algorithm is Andrew J. Davison's publication of 2003: "Real-Time Simultaneous Localisation and Mapping with a Single Camera" (DOI 10.1109/ICCV.2003.1238654). Further reference may be made to H. Durrant-Whyte e.a., "Simultaneous localization and mapping: part I" (DOI: 10.1109/MRA.2006.1638022) and T. Bailey, "Simultaneous localization and mapping (SLAM): part II" (DOI: 10.1109/MRA.2006.1678144). In the SLAM literature, a visual feature stored in the computer model is frequently referred to as "landmark". The computer or 3D model of the visual features in which the landmarks are stored is also referred to as "map" in the literature, and the process of creating it is called "mapping".

SLAM algorithms are tailored to the available resources, hence not aimed at perfection, but at operational compliance. Published approaches are employed in self-driving cars, unmanned aerial vehicles, autonomous underwater vehicles, planetary rovers, and in the field of robotics.

One pivotal advantage of SLAM-based positioning systems is that they do not experience drift because the 3D model of the visual features, i.e., the map, "anchors" the position and orientation of the camera relative to the known 3D positions of the visual features.

SLAM-based approaches do, however, require considerable time and resources to map the camera's surroundings. Once a map is created, it can be used on multiple occasions even after the positioning system has been shut down for an extended period of time. If being restarted after an extended period of time, an initial determination of the system's position is required, i.e., the positioning system must determine the position of its camera relative to the visual features contained in an image captured by the camera. In order to achieve this, the positioning system must establish correspondence between the visual features detected by its camera and the landmarks in the 3D model.

The landmarks in the computer model are stored in a distinguishable manner from each other, e.g. by assigning unique IDs to each landmark. For the purpose of explanation, it may be assumed that each landmark in a given map is assigned an ID indicated by a lowercase letter (a, b, c, ...). The computer model stores a position in 3D space for each landmark.

In a given positioning system, the computer model contains N landmarks in total. The camera of the positioning system is able to detect M visual features in one frame, where it is usually the case that N≥M. The task of establishing correspondence between the M visual features detected in an image and the corresponding landmarks in the computer model yields a combinatorial problem with number of combinations being $C = \frac{N!}{(N-M)!}.$

In SLAM systems, this task proves to be particularly difficult when the positioning system is started after being switched off for an unknown period of time. The problem may also occur while the positioning system is active but the camera's vision is obstructed for an extended period of time. From the above considerations, it is evident that a need for robust yet efficient means to determine the system's location exists, in order to enable the positioning system to quickly and reliably return to determining its position based on the stored 3D model even after being inactive for an extended period of time.

In light of the above, it is an object of the present invention to provide an improved solution to the problem of determining the three-dimensional position of an object with a camera based positioning system that is configured to locate an object based on a stored 3D model of visual features. In particular, it is an object of the present invention to enable a camera based positioning system to determine the location of the camera and/or an object attached thereto under circumstances in which the positioning system is not able to identify the visual features captured by the camera. Herein, it is desired that the improved solution exhibits a feasible tradeoff between robustness and required computational power.

The above object is solved by a positioning system according to the subject-matter of claim 1 and a method for determining the three-dimensional position of an object according to the subject-matter of claim 7. Preferred embodiments of the invention are defined by the subject-matter of the dependent claims.

In particular, the problem is solved by a positioning system for determining the three-dimensional position of a movable object, comprising a camera that is rigidly attachable to the object and is configured to capture a series of images containing image representations of at least a part of a plurality of visual features that are placeable or placed at fixed locations spaced apart from the object, storage means for storing a 3D model of the plurality of visual features, the 3D model comprising a set of landmarks with one landmark for each visual feature, each landmark containing information on the three-dimensional position of the corresponding visual feature, and computing means that are configured to:

- create a 3D submodel of the visual features whose image representations are contained in the series of images captured by the camera, the 3D submodel comprising a set of sub-landmarks with one sub-landmark for each visual feature whose image representation is contained in the series of images captured by the camera, each sub-landmark containing information on the three-dimensional position of the corresponding visual feature;

- perform matching between the 3D submodel and the 3D model to identify at least a part of the visual features whose three-dimensional position is contained in the 3D submodel;

- determine the three-dimensional position of the object based on the information on the three-dimensional positions of the visual features identified in the matching process.

In the context of the present invention, the task of determining the three-dimensional position of an object is addressed with the use of a positioning system and corresponding method in which a 3D model of visual features in the environment of the positioning system is already available. With this, the task of determining the three-dimensional position of an object is, to a large extent, reduced to the problem of identifying visual features that are detected by the positioning system in the already available 3D model. Identifying at least a part of the visual features whose three-dimensional position is contained in the 3D submodel corresponds to identifying at least a part of the visual feature whose three-dimensional position is contained in the 3D submodel within the 3D model. That is, identifying visual features by matching between 3D submodel and 3D mdoel comprises identifying to which landmarks in the 3D model the sub-landmarks in the 3D submodel correspond.

An important aspect of the invention rests on the recognition that, while the mapping of a large 3D model or map (such as the one already available in the positioning system) is a time-consuming task, the mapping of a relatively small number of visual features is a quick and convenient task. The invention recognizes that solving the basic problem of creating a 3D model of the visual features in order to enable the positioning of an object can also contribute to the solution of the problem to determine the location of the movable object within an analogous 3D model.

Thus, according to the invention, when the positioning system is operated in a state in which it cannot determine to which landmarks in the 3D model the image representations of the visual features captured in a series of images correspond (e.g. when the operation of the positioning system is resumed after a certain period of inactivity), the positioning system is configured to create a 3D submodel for the visual features that are captured in the series of images. As the designation "3D submodel" implies, the 3D submodel contains position information on only a part of the visual features described in the 3D model, since only a part of the visual features is considered in the mapping of the 3D submodel, i.e. those visual features captured in the series of images.

For the creation of the 3D submodel, the same "Structure from Motion" techniques that may be used to build the 3D model of the visual features in the camera's surroundings can be used again.

For example, when mapping is started, the only available information is a sequence of camera images and the representations of visual features contained within them. The camera is then moved around. This means that the captured images in the sequence will differ one from another. Tracking of individual features across multiple sequential images can be facilitated by the use of measuring tools other than the camera that provide information on the position and/or orientation of the camera. Such measuring tools include a gyroscope, accelerometer, magnetometer, barometer, etc. While individual features are being tracked across multiple sequential images, the map of the features is being created via the use of the mentioned standard "Structure from Motion" techniques.

The 3D submodel thus created is used to contribute to the determination of the position of the object in the following way: The 3D submodel is essentially a set of 3D locations that represent the positions of the visual features that are captured in the series of images relative to each other. This set need not be large and can be mapped fairly quickly.

The problem of determining the position of the object is thus shifted to the problem of establishing a correspondence between the set of 3D positions contained in the 3D submodel and the larger set of 3D positions contained in the 3D model.

When a 3D submodel of sufficient size, e.g. a 3D submodel containing three landmarks or more, is established, the positioning system can perform matching between the 3D submodel and the 3D model in order to establish a correspondence between the 3D submodel and 3D model. This matching or correspondence establishment yields information to which landmarks in the 3D model the visual features represented in the sub-landmarks of the 3D submodel correspond. Once this matching is successfully completed, the positioning system may determine the position of the camera (and thus, the position of the object rigidly attached to the camera) by using the 3D model and conventional positioning determining methods.

With the positioning system according to the present invention, the location of an object can be determined with high reliability and speed, particularly in situations in which the positioning system is not able to identify the visual features captured by the camera.

The object whose position is to be determined is not particularly limited, as long as the camera of the positioning system is rigidly attachable to the object. This ensures a fixed positional relation between camera and object, so that the position of the object can be readily inferred from the position of the camera that is determined with the positioning system. The object can also be the camera of the positioning system itself.

In the context of the present invention, the term "landmark" is used in the conventional way, i.e. a landmark is the representation of a visual feature as stored in a 3D computer model and contains, at least, information relating to the three-dimensional position of the visual feature. Landmarks of the 3D model are referred to as landmarks, whilst landmarks of the 3D submodel are referred to as sub-landmarks. If it is apparent from the context that no distinction between the information in the 3D model and in the 3D submodel is intended, both landmarks and sub-landmarks may be commonly referred to as landmarks.

Since landmarks (and sub-landmarks) contain information on the three-dimensional position of a visual feature, the term "landmark" or "sub-landmark" may be used synonymously with the corresponding information on the three-dimensional position stored in the 3D model or 3D submodel.

The information on the three-dimensional positions of the visual features in the 3D model and the 3D submodel may comprise Cartesian coordinates of the visual features. Alternatively, or additionally, the information on the three-dimensional position may also include a probability distribution that models the system's belief about the position of a visual feature.

In the context of the present invention, the term "visual feature" is to be understood as a part of the camera's (and/or object's) surroundings whose presence and location can be automatically detected in a camera image. A visual feature can be any salient part of the camera's environment. When a visual feature is captured by the camera, it is represented by a discernible area in the image. For example, a rectangular picture on a wall comprises at least four visual features, namely, the corners of the picture. Visual features need not be corners. Their image representation may take the form of blobs, circles, triangles, rectangles or any other shape that can be detected in an image. They can be natural (already in the environment) or artificial, e.g., in the form of visible markers that are placeable or placed at fixed locations spaced apart from the camera.

If the information on the three-dimensional positions of the visual features is to be expressed as Cartesian coordinates in the landmarks, the corresponding visual feature needs to be idealized to a "point-based" feature. For this, a method of extracting point location from detected features in the captured images may be used. Such a method for extracting a point from a detected feature should be consistent in a way that the extracted points from multiple images of a single visual feature all correspond to a close proximity of a single 3D point in real space.

For example, a corner can be recognized only when considering a group of connected pixels, but a group of pixels is not a precise point location of a feature. That is why, after the corner has been recognized, a point location that represents a tip of that corner, with real numbers for Cartesian coordinates, can be calculated from the group of pixels in which the corner has been recognized. Similarly, a feature can be a blob, i.e. a discernable group of neighbouring pixels in an image of a somewhat convex shape. A point location can be extracted from a blob by calculating the center pixel position of a closed area of pixels representing the blob whose brightness in the image exceeds a predetermined threshold, or by some other similar method. In the context of the present invention, it is not decisive whether the landmarks contain point-based information on the visual features or a probability distribution, as described above. The precision of the information on the three-dimensional position of the visual features simply limits the maximum obtainable accuracy of the position determination.

The task of performing matching between the 3D submodel and the 3D model is equivalent to finding a 3D transformation consisting of rotation, translation and scaling which satisfies the following condition: There is a sufficient number of sub-landmarks in the 3D submodel that, when transformed by said 3D transformation, overlap with the landmarks in the 3D model. The requirement of overlap is not restricted to identical positions of the sub-landmarks and landmarks, since the mapping of the visual features when building the 3D model and the 3D submodel can lead to errors in the position information.

An overlap between landmarks and sub-landmarks is assumed when, after performing the 3D transformation on the sub-landmarks, they lie in close proximity to each other, e.g. when the distance between them does not exceed a predetermined threshold. If the position information in at least one of the 3D model and the 3D submodel is provided as probability distribution, an overlap may be assumed when probability distributions of the positions in landmarks and sub-landmarks overlap, or when the distance between the distributions does not exceed a predetermined threshold, or if discrete positions of one model lie within the probability distribution of the other model, or if the minimum distance of the discrete position of one model to the probability distribution of the other model does not exceed a predetermined threshold.

When the matching is completed, the position determination can be seamlessly continued on the basis of the 3D model. A suitable analysis of the upcoming images captured by the camera to determine the position may be based on a suitable SLAM algorithm.

According to a preferred embodiment, the computing means are configured to perform matching by a pairwise comparison of landmarks and sub-landmarks.

Generally speaking, assuming that the 3D submodel contains M sub-landmarks and the 3D model contains N landmarks (with M≤N), the number of possible combinations for a match is $\prod_{i=0}^{M-1}(N-i).$ By performing matching in a pairwise manner, an iterative procedure for the matching process can be provided, which enables a computationally efficient and straightforward approach.

It is further preferred that the computing means are configured to compute descriptors for at least a part of the landmarks and sub-descriptors for at least a part of the sub-landmarks and perform matching by a pairwise comparison of descriptors and sub-descriptors, wherein the computation of the descriptors and sub-descriptors is based on the distribution of neighbouring landmarks and sub-landmarks, respectively.

As with landmarks, the terms "descriptor" and "sub-descriptor" are used if it is required to distinguish between properties of a landmark of the 3D model and properties of a sub-landmark of the 3D submodel. If general properties or features of descriptors are described that apply to both descriptors and sub-descriptors alike, the term "descriptor" may be used to refer to descriptors and sub-descriptors.

Particularly when performing a pairwise comparison between landmarks and sub-landmarks, it is advantageous to take information on the distribution of neighbouring landmarks/sub-landmarks into account during the comparison, because such information is able to characterize individual landmarks and make them distinguishable from each other. Thus, the use of descriptors allows for a more efficient matching process.

Preferably, descriptors contain numerical values quantifying a property of the landmark's environment. More preferably, descriptors are invariant to rotation, translation and/or scale. This facilitates the computation of descriptors as well as the matching based on the descriptors. The matching can be performed by comparing the numerical values of a descriptor and sub-descriptor and requiring that the difference of the values does not exceed a predetermined threshold in order to prod uce a match.

Descriptors can be calculated at the time of performing matching between the corresponding landmarks and sub-landmarks. Alternatively, all descriptors of the 3D model and/or all descriptors of the 3D submodel can be calculated once and stored in a data structure of the storage means.

It is particularly preferred that the computing means are configured to compute the descriptor for a landmark and the sub-descriptor for a sub-landmark as a set of numerical values, the numerical values comprising at least one of

$$\frac{\left\|\overrightarrow{d_2}\right\|}{\left\|\overrightarrow{d_1}\right\|}; \frac{\overrightarrow{d_2}\cdot\overrightarrow{d_2}}{\overrightarrow{d_1}\cdot\overrightarrow{d_1}}; \overrightarrow{d_1}\cdot\overrightarrow{d_2}; \frac{\overrightarrow{d_1}}{\left\|\overrightarrow{d_1}\right\|}\cdot\frac{\overrightarrow{d_2}}{\left\|\overrightarrow{d_2}\right\|}; \overrightarrow{d_1}\times\overrightarrow{d_2}; \frac{\overrightarrow{d_1}}{\left\|\overrightarrow{d_1}\right\|}\times\frac{\overrightarrow{d_2}}{\left\|\overrightarrow{d_2}\right\|};$$

$$\frac{\left\|\overrightarrow{d_3}\right\|}{\left\|\overrightarrow{d_1}\right\|}; \frac{\overrightarrow{d_3}\cdot\overrightarrow{d_3}}{\overrightarrow{d_1}\cdot\overrightarrow{d_1}}; \overrightarrow{d_1}\cdot\overrightarrow{d_3}; \frac{\overrightarrow{d_1}}{\left\|\overrightarrow{d_1}\right\|}\cdot\frac{\overrightarrow{d_3}}{\left\|\overrightarrow{d_3}\right\|}; \overrightarrow{d_1}\times\overrightarrow{d_3}; \frac{\overrightarrow{d_1}}{\left\|\overrightarrow{d_1}\right\|}\times\frac{\overrightarrow{d_3}}{\left\|\overrightarrow{d_3}\right\|};$$

$$\frac{\left\|\overrightarrow{d_3}\right\|}{\left\|\overrightarrow{d_2}\right\|}; \frac{\overrightarrow{d_3}\cdot\overrightarrow{d_3}}{\overrightarrow{d_2}\cdot\overrightarrow{d_2}}; \overrightarrow{d_2}\cdot\overrightarrow{d_3}; \frac{\overrightarrow{d_2}}{\left\|\overrightarrow{d_2}\right\|}\cdot\frac{\overrightarrow{d_3}}{\left\|\overrightarrow{d_3}\right\|}; \overrightarrow{d_2}\times\overrightarrow{d_3}; \frac{\overrightarrow{d_2}}{\left\|\overrightarrow{d_2}\right\|}\times\frac{\overrightarrow{d_3}}{\left\|\overrightarrow{d_3}\right\|};$$

wherein $\overrightarrow{d_1}$ is a vector from the landmark or sub-landmark to the closest landmark or sub-landmark, $\overrightarrow{d_2}$ is a vector from the landmark or sub-landmark to the second closest landmark or sub-landmark, and $\overrightarrow{d_3}$ is a vector from the landmark or sub-landmark to the third closest landmark or sub-landmark.

The above descriptor values have various advantages. They represent a good tradeoff between specificity of the description of the landmark's environment and computational power required for the calculation. Furthermore, all specified descriptor values are invariant to translation, rotation and/or scale, which further facilitates the matching process.

With the use of descriptors, the computing means may be configured to perform matching by pairwise comparison of the descriptor of a landmark and the sub-descriptor of a sub-landmark. It may be determined that a match is found when one landmark is matched to one sub-landmark. In this case, the next and second next neighbours of the matched landmark and sub-landmark, which have been taken into account for the computation of the respective descriptor and sub-descriptor, may also be considered a match.

Generally, wherein there is no regularity in landmark positions, a vast majority of descriptor comparisons will not produce a match. This is because points rarely have a sufficiently similar distribution of neighbouring points that would yield a match based on descriptors. However, there are situations where many descriptor matches may be found even for incorrect correspondences. These situations are most often caused by overly regular distributions of landmarks, such as a perfect grid, and weak thresholds in the matching criteria.

In such cases, it is preferable that the computing means are configured to perform corroboration during the matching process. It is particularly preferred that corroboration is performed after the (descriptor) matching has returned a positive result.

Corroboration is a process of verifying a match. That is, for corroboration, the computing means are configured to perform further comparisons between the 3D model and the 3D submodel, and to terminate the matching process with a positive result if a sufficient number of the additional comparisons return a positive result, and to continue with the matching process if the additional comparisons return a negative result or an insufficient number of positive results. This way, incorrect correspondences can be eliminated and the reliability of the positioning system is improved.

According to a further preferred embodiment, the computing means are configured to perform matching by

- selecting a set of landmarks consisting of a landmark and its closest neighbour and second closest neighbour and a set of sub-landmarks consisting of a sub-landmark and its closest neighbour and second closest neighbour;

- determining a transformation that transforms the set of landmarks into the set of sub-landmarks; and

- performing corroboration.

This approach to matching does not rely on the use of descriptors. Instead, a set of landmarks and a set of sub-landmarks are created from the 3D model and the 3D submodel, respectively, with each set containing three members. Herein, the respective set members are not chosen arbitrarily but such that each set comprises one landmark/sub-landmark and its respective two closest neighbours.

Based on these two sets, a transformation that, when applied to the set of sub-landmarks, brings the transformed sub-landmarks to an overlap with the set of landmarks can be determined. In order to verify whether the two sets correspond to a match, corroboration is performed. For the corroboration, it is preferred that the transformation is applied to sub-landmarks that are not contained in the selected set of sub-landmarks. The transformed sub-landmarks are then overlaid with the landmarks of the 3D model, i.e., the distance between a transformed sub-landmark and the closest landmark is determined, and compared to a predetermined threshold. If the distance lies below the predetermined threshold, the transformed sub-landmark and the closest landmark are considered a match. For each match between transformed sub-landmark and landmark, a corroboration count is incremented by 1. Matching is terminated with a positive result when the corroboration count reaches or exceeds a predetermined threshold.

The object of the invention is further solved by a method for determining the three-dimensional position of a movable object, the method comprising:

a) receiving a series of images captured by a camera that is rigidly attached to the object, the images containing image representations of at least a part of a plurality of visual features that are placed at fixed locations spaced apart from the object,

b) creating a 3D submodel of the visual features whose image representations are contained in the series of images captured by the camera, the 3D submodel comprising a set of sub-landmarks with one sub-landmark for each visual feature whose image representation is contained in the series of images captured by the camera, each sub-landmark containing information on the three-dimensional position of the corresponding visual feature;

c) performing matching between the 3D submodel and a 3D model to identify at least a part of the visual features whose three-dimensional position is contained in the 3D submodel, the 3D model comprising a set of landmarks with one landmark for each visual feature, each landmark containing information on the three-dimensional position of the corresponding visual feature;

d) determining the three-dimensional position of the object based on the information on the three-dimensional positions of the visual features identified in the matching process.

The technical advantages achieved with the method of the present invention correspond to those achieved with the positioning system described above. Aspects, features and advantages described in the context of the inventive positioning system are also applicable to the inventive method, and vice versa. In particular, any task that the computing device of the inventive positioning system is configured to perform can be employed as a method step in the inventive method, and vice versa. Preferably, the inventive method is performed using an inventive positioning system as described above.

As with the inventive positioning system, the inventive method for determining the three-dimensional position of a movable objects provides a robust and computationally efficient solution to locating an object after the camera of the positioning system lost track of the 3D model and cannot determine which visual features are represented in the currently captured images.

It should be noted that the method is not strictly limited to the above-identified order of the steps. The steps may partially be performed simultaneously. For example, the creation of the 3D submodel may be performed and continued whilst simultaneously performing step c) on the basis of the sub-landmarks currently available in the 3D submodel. Step a), b) and c) may furthermore be repeated until a sufficient match is established in step c) in order to enable the position determination of step d).

It is preferred that the matching is performed by a pairwise comparison of landmarks and sub-landmarks. This enables the realization of a matching process that is simple to implement and reliable.

It is particularly preferred that matching is performed by a pairwise comparison of descriptors, wherein the descriptors have the properties as described in the context of the inventive positioning system above. A matching process based on descriptors is simple to implement, requires low computational power, is very robust and may considerably accelerate the matching process, since false matches can be quickly dismissed at low computational effort.

As described before, the step of performing matching by pairwise comparison of landmarks and sub-landmarks based on their respective descriptor/sub-descriptor can be terminated with a positive result, if one match is found. Alternatively, matching may be continued until a predetermined number of matches between pairs of descriptors and sub-descriptors has been found. Furthermore, if matching is terminated with a positive result as described, a corroboration can be performed on the matching result.

For corroboration, it is preferred that matching is performed until a sufficient number of sub-landmarks have been matched to corresponding landmarks to enable the determination of a 3D transformation that, when applied to the sub-landmarks, transforms their positions to those of the matched landmarks. Typically, three matches or more are sufficient to determine said transformation. Once matching has been performed to yield the predetermined number of matches between sub-landmarks and landmarks, the transformation is determined. For corroboration, the transformation is applied to one or more sub-landmarks, and it is determined whether the transformed sub-landmark matches a landmark, e.g., whether the distance between the (position of the) transformed sub-landmark and the (position of the) closest landmark lies below a predetermined threshold. If this is the case, a corroboration count is incremented by 1. In this way, corroboration is continued until the corroboration count reaches or exceeds a predetermined threshold. If the threshold is reached or exceeded, it is confirmed that the matching is positive, and the matching process is ended. If the corroboration count does not reach or exceed the predetermined threshold, it is determined that the match is false, and the method resumes with the process of performing matching by comparing another pair of sub-landmark and landmark.

If matching is performed with a descriptor that takes into account the two next neighbours, it may be assumed that three corresponding pairs of descriptors and sub-descriptors have been found when a descriptor comparison yields a match. In this case, it may be sufficient to perform matching until one match is found, and to use the landmarks that were used to calculate the descriptor and the sub-landmarks that were used to calculate the sub-descriptor for the determination of the transformation that will be used for corroboration.

In a further preferred embodiment, matching is performed by

- selecting a set of landmarks consisting of a landmark, its closest neighbour and its second closest neighbour, and a set of sub-landmarks consisting of a sub-landmark, its closest neighbour and its second closest neighbour;

- determining a transformation that transforms the set of landmarks into the set of sub-landmarks; and

- performing corroboration.

With this embodiment, matching may be performed without the calculation of descriptors, which may be preferable in certain scenarios.

In the described methods of performing matching, finding closest neighbours of landmarks and sub-landmarks is a common task that has to be performed frequently. In one embodiment, for optimization purposes, this task may be performed once for each landmark and/or for each sub-landmark. The result may be stored in a table containing a list of k closest neighbours of each landmark/sub-landmark.

In order to further optimize the described method, it may be preferable to store landmarks and/or sub-landmarks in a hashmap data structure based on their position, which allows quick access to the landmarks and/or sub-landmarks lying inside a cubicle of 3D space that is significantly smaller than the total space of the original 3D model and/or 3D submodel.

The object of the invention is further solved by a computer-readable medium containing instructions that, when executed by at least one processor, cause the at least one processor to perform a computer-implemented method comprising steps in accordance with the inventive method described above. The technical advantages achieved with the method of the present invention correspond to those achieved with the computer-implemented method and corresponding computer-readable medium. Aspects, features and advantages described in the context of the inventive method are also applicable to the inventive computer-implemented method and computer-readable medium.

The above and further features and advantages of the present invention will become more readily apparent from the following detailed description of preferred embodiments of the invention with reference to the accompanying drawings, in which:

Fig. 1      is a schematic illustration of a positioning system according to a preferred embodiment of the present invention;

Fig. 2a-c   are conceptual drawings illustrating definitions of a descriptor according to preferred embodiments of the present invention.

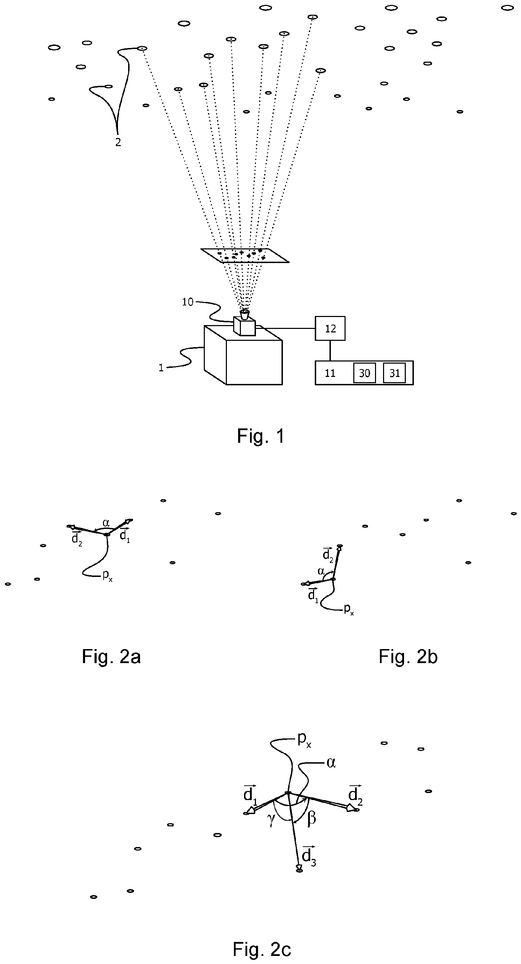

Fig. 1 is a schematic illustration of a positioning system according to a preferred embodiment of the present invention. The positioning system is used to determine the location of an object 1. A camera 10 is rigidly attached to the object 1, such that the relative position and orientation between the object 1 and the camera 10 remains unaltered when the object 1 and the camera 10 are moved.

The camera 10 is communicatively coupled to a computing means 12 and a storage means 11, which is configured to store a 3D model 30 and a 3D submodel that will be discussed in greater detail below. The computing means 12 and the storage means 11 may be contained in a unit or units distinct from the camera 10, e.g. in a computer that is communicatively coupled to the camera 10. Alternatively, the computing means 12 and/or the storage means 11 may be included in the camera 10, e.g. in the form of a microcomputer and corresponding data storage device.

The positioning system comprises the camera 10, the storage means 11 and the computing means 12.

Spaced apart from the object 1, a plurality of visual features 2 is present in the environment of the object 1. In the embodiment shown in Fig. 1, the visual features 2 are represented by circular or elliptic markers that are located above the object 1. Neither the position relative to the object 1 nor the nature of the visual features 2 is limited to this embodiment. It is merely decisive that the camera 10 is able to capture images containing image representations of at least a part of the visual features 2.

In Fig. 1, an image plane is schematically depicted above the camera 10. Visual features 2 that are in the field of view of the camera 10 will be visible in an image captured by the camera. In Fig. 1, nine visual features 2 are in the field of view of the camera 10. The image representations of these visual features 2 are schematically indicated in the depicted image plane above the camera 10. When the object 1 and, thus, the camera 10, are moved, the camera's position and orientation will change. Correspondingly, images captured by the camera during movement will display movement of the image representations of the visual features 2 in the camera's field of view. Some visual features 2 will leave the field of view of the camera 10 and other visual features 2 will enter the field of view of the camera 10.

The storage means 11 comprises a 3D model of the visual features 2. The 3D model contains information on the three-dimensional positions of the visual features 2 that are referred to as landmarks $p_0$. If N visual features 2 are considered in the 3D model, the 3D model will contain N landmarks $p_1$, $p_2$, ..., $p_n$ containing information on the three-dimensional position of a corresponding visual feature 2.

If the positioning system can determine which visual features 2 are currently in the field of view of the camera 10, and if the positioning system can identify which landmark $p_0$ corresponds to which visual feature 2 represented in the image, the position of the camera 10 and the object 1 can be calculated, based on the known position of the visual features 2 contained in the 3D model and the intrinsic properties of the camera 10.

If, however, the camera 10 is obstructed and moved during that time, or if the positioning system is turned off for a while and turned back on again, it is not possible to determine which visual features 2 are captured in the image of the camera 10. In this case, it is not possible to determine the position of the camera 10 and the object 1.

In order to determine the three-dimensional position of the camera 10 and, thus, of the object 1 in this case, the visual features 2 in the field of view of the camera 10, whose image representations are contained in the images captured by the camera 10, need to be identified.

According to a preferred embodiment of the invention, this task is fulfilled by creating a 3D submodel 31 containing information on the position of a part of the landmarks 2. The 3D submodel 31 is then matched to the 3D model 30. Once a match is established, it is possible to identify the visual features 2 whose position is contained in the 3D submodel 31. The position of the camera 10 and the object 1 can then be determined based on the landmarks $p_0$ of the identified visual features 2 contained in the 3D model 30, since the visual features 2 in the field of view of the camera 10 can be identified.

In order to create the 3D submodel 31, any method suitable to create the 3D model 30 may be used. Preferably, a SLAM based method and/or a "Structure from Motion" technique is used. For this, the camera 10 is turned on to capture a series of images containing image representations of visual features 2. During the capturing of the series of images, the camera 10 and the object 1 are moved. As explained above, as a result, the content of the captured images will vary with the movement of the camera 10. Positions of the image representations of the visual features 2 in the series of captured images will sequentially change over the series of images. Using known algorithms such as SLAM algorithms, it is possible to track the image representations of individual visual features 2 across multiple sequential images. From the movement of the visual features 2 across multiple images, the positions of the visual features 2 can be determined. The tracking and position determination of the visual features 2 may be further facilitated by the use of sensors that provide information on the movement of the camera 10, such as a gyroscope, an accelerometer, a magnetometer, a barometer or the like.

After a sequence of images is captured during movement of the camera 10, information about the position of a number of visual features 2 is determined and stored in the 3D submodel 31. The information on the three-dimensional position of the visual features 2 as stored in the 3D submap 31 is also referred to as sub-landmarks $p_s$. With M visual features 2 detected during the creation of the 3D submodel 31, the 3D submodel 31 contains M sub-landmarks $p_{s1}$, $p_{s2}$, ..., $p_{sm}$.

In order to determine the position of the object 1, the positioning system establishes a correspondence between the 3D submodel 31 and the 3D model 30. When a correspondence is established, the visual features 2 represented by the sub-landmarks $p_{s1}$, $p_{s2}$, ..., $p_{sm}$ can be identified in the 3D model 30. Then, the position of the object 1 can be determined based on the position of the identified visual features 2.

According to a preferred embodiment, the matching between the 3D submodel 31 and the 3D model 30 is performed by a pairwise comparison of landmarks $p_0$ and sub-landmarks $p_s$. For each landmark $p_0$ and sub-landmark $p_s$ to be compared, a corresponding descriptor $d_0$ and sub-descriptor $d_s$ is calculated. The descriptor $d_0$ and the sub-descriptor $d_s$ are compared, and if they are found to be sufficiently similar, a match between the compared descriptor $d_0$ and sub-descriptor $d_s$ is confirmed.

The descriptors $d_0$ and sub-descriptors $d_s$ comprise at least one numerical value indicative of the environment of the corresponding landmark $p_0$ and sub-landmark $p_s$. A similarity or match of the compared descriptors thus corresponds to a similarity or match of the surroundings of the compared landmarks and sub-landmarks. A matching between the 3D submodel 31 and the 3D model 30 that is based on descriptors thus greatly facilitates the matching process and increases its reliability.

Fig. 2a to 2c schematically illustrate definitions of descriptors according to preferred embodiments of the invention. In order to enable a fast yet reliable matching between landmarks $p_0$ and sub-landmarks $p_s$, the descriptors $d_0$ and sub-descriptors $d_s$ are defined such that they are invariant to rotations, translations and/or scalings.

For the description of the definitions illustrated in Fig. 2a-c, no distinction is made between landmarks $p_0$ and sub-landmarks $p_s$, or between descriptors $d_0$ and sub-descriptors $d_s$. The following definitions are applicable to the calculation of both descriptors $d_0$ and sub-descriptors $d_s$, based on the information available in the 3D model 30 and the 3D submodel 31, respectively.

Fig. 2a and 2b illustrate the definition of a first descriptor according to a preferred embodiment of the present invention. Descriptors comprise a set of numerical values that are indicative of the environment of the corresponding landmark. In Fig. 2a, a descriptor for the landmark $p_x$ is illustrated. In order to compute the descriptor, the two next nearest neighbours of the landmark $p_x$ are identified. Then, the vector $\overrightarrow{d_1}$ between the landmark $p_x$ and its nearest neighbour is computed. Likewise, the vector $\overrightarrow{d_2}$ between the landmark $p_x$ and its second nearest neighbour is computed.

From the vectors $\overrightarrow{d_1}$ and $\overrightarrow{d_2}$, multiple descriptor values that are invariant to rotations, translations and/or scalings can be computed. For example, the quotient of the magnitudes of the vectors, $\|\overrightarrow{d_1}\|/\|\overrightarrow{d_2}\|$ yields a descriptor value invariant to rotation, translation and scaling. Likewise, the vector product of the vectors or the vector product of the normalized vectors may be considered. From the vector product of the vectors $\overrightarrow{d_1}$ and $\overrightarrow{d_2}$ the angle $\alpha$ between the vectors can be calculated, which is also invariant to rotation, translation and scaling.

Fig. 2c illustrates a case in which the three nearest neighbours of a landmark $p_x$ are taken into account for the calculation of a descriptor. Analogously to the method described above with reference to Fig. 2a and 2b, the three next nearest neighbours of the landmark $p_x$ are identified. Then, the vector $\overrightarrow{d_1}$ between the landmark $p_x$ and its nearest neighbor, the vector $\overrightarrow{d_2}$ between the landmark $p_x$ and its second nearest neighbor, and the vector $\overrightarrow{d_3}$ between the landmark $p_x$ and its third nearest neighbor is computed.

From these three vectors, various invariant descriptor values may be calculated. Nonlimiting examples for suitable descriptor values are

$$\frac{\|\overrightarrow{d_2}\|}{\|\overrightarrow{d_1}\|}; \frac{\overrightarrow{d_2} \cdot \overrightarrow{d_2}}{\overrightarrow{d_1} \cdot \overrightarrow{d_1}}; \overrightarrow{d_1} \cdot \overrightarrow{d_2}; \frac{\overrightarrow{d_1}}{\|\overrightarrow{d_1}\|} \cdot \frac{\overrightarrow{d_2}}{\|\overrightarrow{d_2}\|}; \overrightarrow{d_1} \times \overrightarrow{d_2}; \frac{\overrightarrow{d_1}}{\|\overrightarrow{d_1}\|} \times \frac{\overrightarrow{d_2}}{\|\overrightarrow{d_2}\|};$$

$$\frac{\|\overrightarrow{d_3}\|}{\|\overrightarrow{d_1}\|}; \frac{\overrightarrow{d_3} \cdot \overrightarrow{d_3}}{\overrightarrow{d_1} \cdot \overrightarrow{d_1}}; \overrightarrow{d_1} \cdot \overrightarrow{d_3}; \frac{\overrightarrow{d_1}}{\|\overrightarrow{d_1}\|} \cdot \frac{\overrightarrow{d_3}}{\|\overrightarrow{d_3}\|}; \overrightarrow{d_1} \times \overrightarrow{d_3}; \frac{\overrightarrow{d_1}}{\|\overrightarrow{d_1}\|} \times \frac{\overrightarrow{d_3}}{\|\overrightarrow{d_3}\|};$$

$$\frac{\|\overrightarrow{d_3}\|}{\|\overrightarrow{d_2}\|}; \frac{\overrightarrow{d_3} \cdot \overrightarrow{d_3}}{\overrightarrow{d_2} \cdot \overrightarrow{d_2}}; \overrightarrow{d_2} \cdot \overrightarrow{d_3}; \frac{\overrightarrow{d_2}}{\|\overrightarrow{d_2}\|} \cdot \frac{\overrightarrow{d_3}}{\|\overrightarrow{d_3}\|}; \overrightarrow{d_2} \times \overrightarrow{d_3}; \frac{\overrightarrow{d_2}}{\|\overrightarrow{d_2}\|} \times \frac{\overrightarrow{d_3}}{\|\overrightarrow{d_3}\|};$$

From the normalized dot product $\overrightarrow{d_1} \cdot \overrightarrow{d_2}$ or vector product $\frac{\overrightarrow{d_1}}{\|\overrightarrow{d_1}\|} \times \frac{\overrightarrow{d_2}}{\|\overrightarrow{d_2}\|}$, the angle $\alpha$ between the vectors $\overrightarrow{d_1}$ and $\overrightarrow{d_2}$ may be derived as a numerical value for the descriptor of $p_x$. Analogously, the angle $\beta$ between the vectors $\overrightarrow{d_2}$ and $\overrightarrow{d_3}$, and the angle $\gamma$ between the vectors $\overrightarrow{d_1}$ and $\overrightarrow{d_3}$ can be derived as a numerical value of the descriptor of $p_x$ from the respective normalized vector products.

Matching based on descriptors may be performed as follows. First, one landmark $p_{0x}$ from the 3D model 30 and one sub-landmark $p_{sy}$ from the 3D submodel 31 are selected. Then, a descriptor $d_{0x}$ for the landmark $p_{0x}$ and a sub-descriptor $d_{sy}$ for the sub-landmark $p_{sy}$ is calculated, wherein the descriptor $d_{0x}$ and the sub-descriptor $d_{sy}$ contain the same set of descriptor values, e.g. both contain the descriptor values $\|\overrightarrow{d_2}\|/\|\overrightarrow{d_1}\|$, $d_1 \times \overrightarrow{d_3}$ and $\frac{\overrightarrow{d_2}}{\|\overrightarrow{d_2}\|} \times \frac{\overrightarrow{d_3}}{\|\overrightarrow{d_3}\|}$.

The descriptor $d_{0x}$ and the sub-descriptor $d_{sy}$ are compared by calculating the differences between the respective descriptor values. If the differences of all descriptor values lie below a predetermined threshold, a match is confirmed.

Otherwise, it is determined that the landmark $p_{0x}$ and the sub-landmark $p_{sy}$ are no match, and a new pair of landmark and sub-landmark is selected for matching.

In this way, matching is iteratively performed until a predetermined number of matches has been confirmed. When a predetermined number of matches has been confirmed, matching may be terminated.

According to one possible embodiment, correspondence between the 3D submodel 31 and the 3D model 30 is established based on the confirmed matches, and the position of the camera 10 is determined based on the information of the three-dimensional positions of the visual features 2 contained in the matched landmarks.

If a higher robustness against ambiguous matching is desired, corroboration can be performed after a predetermined number of matches has been confirmed. In this case, a set of the matched sub-landmarks $p_{sa}, p_{sb}, ..., p_{sc}$ and a corresponding set of the matched landmarks $p_{0x}, p_{0y}, ..., p_{0z}$ is formed. Then, a transformation Q that transforms the set of matched sub-landmarks $p_{sa}, p_{sb}, ..., p_{sc}$ (i.e., the three-dimensional positions contained in the sub-landmarks) into the set of matched landmarks $p_{0x}, p_{0y}, ..., p_{0z}$ (i.e., the three-dimensional positions contained in the landmarks) is determined. Subsequently, the transformation is iteratively applied to unmatched sub-landmarks $p_{sd}, p_{se}, ....$ For each transformed sub-landmark $p_{sd}Q$, it is investigated whether the transformed sub-landmark $p_{sd}Q$ lies sufficiently close to a landmark contained in the 3D model 30. This investigation can be performed, for example, by identifying the landmark closest to the transformed sub-landmark $p_{sd}Q$ and checking whether the distance between them lies below a predetermined threshold.

If it is decided that the transformed sub-landmark $p_{sd}Q$ lies sufficiently close to a landmark of the 3D model 30, a corroboration count is incremented by 1. In this way, corroboration continues until, either, a predetermined corroboration count is reached or exceeded. If this is the case, corroboration is affirmative, so that the match from which the transformation Q for the corroboration has been determined is confirmed. If the corroboration count does not reach or exceed the predetermined corroboration count after transformation of all sub-landmarks, the match is discarded and matching resumes with the selection of a new pair of landmark and sub-landmark for matching.

When corroboration is affirmative, it is possible to identify to which landmarks $p_0$ in the 3D model 30 the matched sub-landmarks $p_s$ correspond. Then, the position of the camera 10 and the object 1 can be determined based on the information contained in the landmarks $p_0$ identified in the 3D model 30 by the matching process.

Matching can also be performed without the use of descriptors. According to a further preferred embodiment of the present invention, matching is performed as follows.

First, one landmark $p_{0x}$ and one sub-landmark $p_{sa}$ is selected. From the selected landmark $p_{0x}$, a set of landmarks $p_{0x}, p_{0y}, p_{0z}$ is constructed, wherein $p_{0y}$ is the closest neighbor of $p_{0x}$, and wherein $p_{0z}$ is the second closest neighbor of $p_{0x}$. Analogously, a set of sub-landmarks $p_{sa}, p_{sb}, p_{sc}$ is constructed, wherein $p_{sb}$ is the closest neighbor of $p_{sa}$, and wherein $p_{sc}$ is the second closest neighbor of $p_{sa}$.

Then, a transformation Q which transforms the set $p_{sa}, p_{sb}, p_{sc}$ into $p_{0x}, p_{0y}, p_{0z}$ is determined. Based on the transformation Q, corroboration is performed as described above. If the corroboration is affirmative, the match between $p_{0x}$ and $p_{sa}$ is confirmed. If the corroboration does not yield a corroboration count at or above the predetermined corroboration count, the match is discarded and matching resumes with the selection of a new pair of landmark and sub-landmark for matching.

In the description of the corroboration, the determination of a transformation Q for transforming sub-landmarks to landmarks has been described. It is also possible to perform corroboration in an inverse manner, by determining a transformation $Q^{-1}$ that transforms matched landmarks into the respective matched sub-landmarks. In this case, the corroboration is performed by applying the transformation $Q^{-1}$ to landmarks $p_{0x}$ and investigating whether the transformed landmarks $p_{0x}Q^{-1}$ lie sufficiently close to a sub-landmark $p_{sy}$ of the sub-model 31.

## Claims

1. Positioning system for determining the three-dimensional position of a movable object (1), comprising:

   a camera (10) that is rigidly attachable to the object (1) and is configured to capture a series of images containing image representations of at least a part of a plurality of visual features (2) that are placeable or placed at fixed locations spaced apart from the object (1),
   storage means (11) for storing a 3D model (30) of the plurality of visual features (2), the 3D model (30) comprising a set of landmarks ($p_0$; $p_{01}, p_{02}, ..., p_{0n}$) with one landmark ($p_0$) for each visual feature (2), each landmark ($p_0$) containing information on the three-dimensional position of the corresponding visual feature (2), and
   computing means (12) that are configured to:

   • create a 3D submodel (31) of the visual features (2) whose image representations are contained in the series of images captured by the camera (10), the 3D submodel (31) comprising a set of sub-landmarks

($p_s$; $p_{s1}$, $p_{s2}$, $p_{sm}$) with one sub-landmark ($p_s$) for each visual feature (2) whose image representation is contained in the series of images captured by the camera (10), each sub-landmark ($p_s$) containing information on the three-dimensional position of the corresponding visual feature (2);
• perform matching between the 3D submodel (31) and the 3D model (30) to identify at least a part of the visual features (2) whose three-dimensional position is contained in the 3D submodel (31);
• determine the three-dimensional position of the object (1) based on the information on the three-dimensional positions of the visual features (2) identified in the matching process.

2.  Positioning system according to claim 1, wherein the computing means (12) are configured to perform matching by a pairwise comparison of landmarks ($p_0$) and sub-landmarks ($p_s$).

3.  Positioning system according to claim 2, wherein the computing means (12) are configured to compute descriptors ($d_0$) for at least a part of the landmarks ($p_0$) and sub-descriptors ($d_s$) for at least a part of the sub-landmarks ($p_s$) and perform matching by a pairwise comparison of descriptors ($d_0$) and sub-descriptors ($d_s$),
wherein the computation of the descriptors ($d_0$) and sub-descriptors ($d_s$) is based on the distribution of neighbouring landmarks ($p_0$) and sub-landmarks ($p_s$), respectively.

4.  Positioning system according to claim 2 or 3, wherein the computing means (12) are configured to compute the descriptor ($d_0$) for a landmark ($p_0$) and the sub-descriptor ($d_s$) for a sub-landmark ($p_s$) as a set of numerical values, the numerical values comprising at least one of

$$\frac{\|\vec{d_2}\|}{\|\vec{d_1}\|}; \frac{\vec{d_2}\cdot\vec{d_2}}{\vec{d_1}\cdot\vec{d_1}}; \vec{d_1}\cdot\vec{d_2}; \frac{\vec{d_1}}{\|\vec{d_1}\|}\cdot\frac{\vec{d_2}}{\|\vec{d_2}\|}; \vec{d_1}\times\vec{d_2}; \frac{\vec{d_1}}{\|\vec{d_1}\|}\times\frac{\vec{d_2}}{\|\vec{d_2}\|};$$

$$\frac{\|\vec{d_3}\|}{\|\vec{d_1}\|}; \frac{\vec{d_3}\cdot\vec{d_3}}{\vec{d_1}\cdot\vec{d_1}}; \vec{d_1}\cdot\vec{d_3}; \frac{\vec{d_1}}{\|\vec{d_1}\|}\cdot\frac{\vec{d_3}}{\|\vec{d_3}\|}; \vec{d_1}\times\vec{d_3}; \frac{\vec{d_1}}{\|\vec{d_1}\|}\times\frac{\vec{d_3}}{\|\vec{d_3}\|};$$

$$\frac{\|\vec{d_3}\|}{\|\vec{d_2}\|}; \frac{\vec{d_3}\cdot\vec{d_3}}{\vec{d_2}\cdot\vec{d_2}}; \vec{d_2}\cdot\vec{d_3}; \frac{\vec{d_2}}{\|\vec{d_2}\|}\cdot\frac{\vec{d_3}}{\|\vec{d_3}\|}; \vec{d_2}\times\vec{d_3}; \frac{\vec{d_2}}{\|\vec{d_2}\|}\times\frac{\vec{d_3}}{\|\vec{d_3}\|};$$

wherein $\overrightarrow{d_1}$ is a vector from the landmark ($p_0$) or sub-landmark ($p_s$) to the closest landmark or sub-landmark, $\overrightarrow{d_2}$ is a vector from the landmark ($p_0$) or sub-landmark ($p_s$) to the second closest landmark or sub-landmark, and $\overrightarrow{d_3}$ is a vector from the landmark ($p_0$) or sub-landmark ($p_s$) to the third closest landmark or sub-landmark.

5.  Positioning system according to any of the preceding claims, wherein the computing means (12) are configured to perform corroboration during the matching process.

6.  Positioning system according to any of the preceding claims, preferably to claim 1 or 2, wherein the computing means (12) are configured to perform matching by

• selecting a set of landmarks ($p_{01}$, $p_{02}$, $p_{03}$) consisting of a landmark ($p_{01}$) and its closest neighbour ($p_{02}$) and second closest neighbour ($p_{03}$) and a set of sub-landmarks ($p_{s1}$, $p_{s2}$, $p_{s3}$) consisting of a sub-landmark ($p_{s1}$) and its closest neighbour ($p_{02}$) and second closest neighbour ($p_{03}$);
• determining a transformation (Q) that transforms the set of landmarks ($p_{01}$, $p_{02}$, $p_{03}$) into the set of sub-landmarks ($p_{s1}$, $p_{s2}$, $p_{s3}$); and
• performing corroboration.

7.  Method for determining the three-dimensional position of a movable object (1), the method comprising:

a) receiving a series of images captured by a camera (10) that is rigidly attached to the object (1), the images containing image representations of at least a part of a plurality of visual features (2) that are placed at fixed locations spaced apart from the object (1),

b) creating a 3D submodel (31) of the visual features (2) whose image representations are contained in the series of images captured by the camera (10), the 3D submodel (31) comprising a set of sub-landmarks ($p_s$; $p_{s1}$, $p_{s2}$, ..., $p_{sm}$) with one sub-landmark ($p_s$) for each visual feature (2) whose image representation is contained in the series of images captured by the camera (10), each sub-landmark ($p_s$) containing information on the three-dimensional position of the corresponding visual feature (2);

c) performing matching between the 3D submodel (31) and a 3D model (30) to identify at least a part of the visual features (2) whose three-dimensional position is contained in the 3D submodel (31), the 3D model (30) comprising a set of landmarks ($p_0$; $p_{01}$, $p_{02}$, ..., $p_{0n}$) with one landmark ($p_0$) for each visual feature (2), each landmark ($p_0$) containing information on the three-dimensional position of the corresponding visual feature (2);

d) determining the three-dimensional position of the object (1) based on the information on the three-dimensional positions of the visual features (2) identified in the matching process.

8. Method according to claim 7, wherein the matching is performed by a pairwise comparison of landmarks ($p_0$) and sub-landmarks ($p_s$).

9. Method according to claim 8, wherein matching is performed by a pairwise comparison of descriptors ($d_0$) and sub-descriptors ($d_s$), wherein the descriptors are computed ($d_0$) for at least a part of the landmarks ($p_0$) and the sub-descriptors ($d_s$) are computed for at least a part of the sub-landmarks ($p_s$), and wherein the computation of the descriptors ($d_0$) and sub-descriptors ($d_s$) is based on the distribution of neighbouring landmarks ($p_0$) and sub-landmarks ($p_s$), respectively.

10. Method according to claim 8 or 9, wherein the descriptor ($d_0$) for a landmark ($p_0$) and the sub-descriptor ($d_s$) for a sub-landmark ($p_s$) is computed as a set of numerical values, the numerical values comprising at least one of

$$\frac{\|\vec{d_2}\|}{\|\vec{d_1}\|} ; \frac{\vec{d_2} \cdot \vec{d_2}}{\vec{d_1} \cdot \vec{d_1}} ; \vec{d_1} \cdot \vec{d_2} ; \frac{\vec{d_1}}{\|\vec{d_1}\|} \cdot \frac{\vec{d_2}}{\|\vec{d_2}\|} ; \vec{d_1} \times \vec{d_2} ; \frac{\vec{d_1}}{\|\vec{d_1}\|} \times \frac{\vec{d_2}}{\|\vec{d_2}\|} ;$$

$$\frac{\|\vec{d_3}\|}{\|\vec{d_1}\|} ; \frac{\vec{d_3} \cdot \vec{d_3}}{\vec{d_1} \cdot \vec{d_1}} ; \vec{d_1} \cdot \vec{d_3} ; \frac{\vec{d_1}}{\|\vec{d_1}\|} \cdot \frac{\vec{d_3}}{\|\vec{d_3}\|} ; \vec{d_1} \times \vec{d_3} ; \frac{\vec{d_1}}{\|\vec{d_1}\|} \times \frac{\vec{d_3}}{\|\vec{d_3}\|} ;$$

$$\frac{\|\vec{d_3}\|}{\|\vec{d_2}\|} ; \frac{\vec{d_3} \cdot \vec{d_3}}{\vec{d_2} \cdot \vec{d_2}} ; \vec{d_2} \cdot \vec{d_3} ; \frac{\vec{d_2}}{\|\vec{d_2}\|} \cdot \frac{\vec{d_3}}{\|\vec{d_3}\|} ; \vec{d_2} \times \vec{d_3} ; \frac{\vec{d_2}}{\|\vec{d_2}\|} \times \frac{\vec{d_3}}{\|\vec{d_3}\|} ;$$

wherein $\overline{d_1}$ is a vector from the landmark ($p_0$) or sub-landmark ($p_s$) to the closest landmark or sub-landmark, $\overline{d_2}$ is a vector from the landmark ($p_0$) or sub-landmark ($p_s$) to the second closest landmark or sub-landmark, and $\overline{d_3}$ is a vector from the landmark ($p_0$) or sub-landmark ($p_s$) to the third closest landmark or sub-landmark.

11. Method according to any of claims 7 to 10, wherein, performing matching includes performing a corroboration.

12. Method according to any of claims 7 to 11, wherein matching is performed by

• selecting a set of landmarks ($p_{01}$, $p_{02}$, $p_{03}$) consisting of a landmark ($p_{01}$), its closest neighbour ($p_{02}$) and its second closest neighbour ($p_{03}$), and a set of sub-landmarks ($p_{s1}$, $p_{s2}$, $p_{s3}$) consisting of a sub-landmark ($p_{s1}$), its closest neighbour ($p_{02}$) and its second closest neighbour ($p_{03}$);
• determining a transformation (Q) that transforms the set of landmarks ($p_{01}$, $p_{02}$, $p_{03}$) into the set of sub-landmarks ($p_{s1}$, $p_{s2}$, $p_{s3}$); and
• performing corroboration.

Fig. 1

Fig. 2a

Fig. 2b

Fig. 2c

Europäisches
Patentamt

European
Patent Office

Office européen
des brevets

# EUROPEAN SEARCH REPORT

Application Number

EP 20 20 2578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOMINIK AUFDERHEIDE ET AL: "Towards real-time camera egomotion estimation and three-dimensional scene acquisition from monocular image streams", INDOOR POSITIONING AND INDOOR NAVIGATION (IPIN), 2010 INTERNATIONAL CONFERENCE ON, IEEE, PISCATAWAY, NJ, USA, 15 September 2010 (2010-09-15), pages 1-10, XP031810309, ISBN: 978-1-4244-5862-2 * I. Introduction * * II. Visual-Inertial Scene Reconstruction * * IV. Visual Route * * V. Inertial Route * ----- | 1-12 | INV. G06T7/73 |
| A | CARRILLO MENDOZA RICARDO ET AL: "3D self-localization for humanoid robots using view regression and odometry", 2015 12TH INTERNATIONAL CONFERENCE ON ELECTRICAL ENGINEERING, COMPUTING SCIENCE AND AUTOMATIC CONTROL (CCE), IEEE, 28 October 2015 (2015-10-28), pages 1-5, XP032833054, DOI: 10.1109/ICEEE.2015.7357988 [retrieved on 2015-12-14] * the whole document * ----- -/-- | 1-12 | |

TECHNICAL FIELDS SEARCHED (IPC)

G06T

The present search report has been drawn up for all claims

| Place of search | Date of completion of the search | Examiner |
|---|---|---|
| Munich | 18 February 2021 | Blaszczyk, Marek |

EPO FORM 1503 03.82 (P04C01)

page 1 of 2

Europäisches
Patentamt

European
Patent Office

Office européen
des brevets

**EUROPEAN SEARCH REPORT**

Application Number

EP 20 20 2578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LERNER R ET AL: "Pose and Motion Recovery from Feature Correspondences and a Digital Terrain Map", IEEE TRANSACTIONS ON PATTERN ANALYSIS AND MACHINE INTELLIGENCE, IEEE COMPUTER SOCIETY, USA, vol. 28, no. 9, 1 September 2006 (2006-09-01), pages 1404-1417, XP001523379, ISSN: 0162-8828, DOI: 10.1109/TPAMI.2006.192 * the whole document * ----- | 1-12 | |
| A | ZICHAO ZHANG ET AL: "Fisher Information Field: an Efficient and Differentiable Map for Perception-aware Planning", ARXIV.ORG, CORNELL UNIVERSITY LIBRARY, 201 OLIN LIBRARY CORNELL UNIVERSITY ITHACA, NY 14853, 7 August 2020 (2020-08-07), XP081736924, * the whole document * ----- | 1-12 | TECHNICAL FIELDS SEARCHED (IPC) |

The present search report has been drawn up for all claims

| Place of search | Date of completion of the search | Examiner |
|---|---|---|
| Munich | 18 February 2021 | Blaszczyk, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREW J. DAVISON'S.** *Real-Time Simultaneous Localisation and Mapping with a Single Camera,* 2003

- **H. DURRANT-WHYTE.** *Simultaneous localization and mapping: part I*
- **T. BAILEY.** *Simultaneous localization and mapping (SLAM): part II*